# FASCICULE DE BREVET EUROPEEN

(11) **EP 3 898 267 B1**
(45) Date de publication et mention de la délivrance du brevet: **01.11.2023**
(21) Numéro de dépôt: 19848866.0
(22) Date de dépôt: 13.12.2019
(51) Int. Cl.: B60C 1/00

(54) **COPOLYMÈRES DE DIÈNE CONJUGUÉ ET D'ÉTHYLÈNE**
COPOLYMERE AUS KONJUGIERTEM DIEN UND ETHYLEN
COPOLYMERS OF CONJUGATED DIENE AND OF ETHYLENE

(30) Priorité: 18.12.2018 FR 1873202
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: LAFAQUIERE, Vincent, 63040 CLERMONT-FERRAND Cedex 9 (FR); MORESO, Emma, 63040 CLERMONT-FERRAND Cedex 9 (FR)
(74) Mandataire: Gandon-Pain, Sylvie
(86) Numéro de dépôt international: PCT/FR2019/053052
(87) Numéro de publication internationale: WO 2020/128249

(56) Documents cités:
- EP-A1- 0 691 354
- EP-A1- 3 037 467
- DATABASE WPI Week 201837 Thomson Scientific, London, GB; AN 2018-301017 XP002795987, & CN 107 903 349 A (UNIV DALIAN TECHNOLOGY) 13 avril 2018 (2018-04-13)
- DATABASE WPI Week 201643 Thomson Scientific, London, GB; AN 2016-13592N XP002795988, & CN 105 348 424 A (BEIJING INST TECHNOLOGY) 24 février 2016 (2016-02-24)

## Description

Le domaine de l'invention est celui des copolymères de diène conjugué et d'éthylène, riches en unité éthylène et utilisables en tant qu'élastomères dans une composition de caoutchouc pour pneumatique.

Les élastomères diéniques les plus largement utilisés dans la confection des pneumatiques sont les polybutadiènes, les polyisoprènes, en particulier le caoutchouc naturel, et les copolymères de 1,3-butadiène et de styrène. Le point commun à ces élastomères est la forte proportion molaire d'unités diéniques dans l'élastomère, généralement très supérieure à 50%, ce qui peut les rendre sensibles à l'oxydation, notamment sous l'action de l'ozone.

La Demanderesse a décrit des élastomères qui a contrario sont relativement pauvres en unités diéniques, notamment en vue de réduire leur sensibilité aux phénomènes d'oxydation. Ces élastomères sont par exemple décrits dans le document WO 2007054223. Ce sont des copolymères de 1,3-butadiène et d'éthylène contenant plus de 50% en mole d'unité éthylène. Ces élastomères sont qualifiés d'élastomères diéniques riches en éthylène.

Les copolymères de 1,3-butadiène et d'éthylène riches en éthylène sont cristallins et voient leur cristallinité augmenter avec le taux d'éthylène. La présence de parties cristallines dans le copolymère peut être problématique lorsqu'on utilise le copolymère dans une composition de caoutchouc. La fusion des parties cristallines du copolymère entraînant une baisse de sa rigidité, une composition de caoutchouc contenant un tel copolymère et utilisée dans un pneumatique voit aussi sa rigidité diminuer lorsqu'elle est portée à des températures égalant ou dépassant la température de fusion des parties cristallines, ce qui peut être le cas pendant les phases répétées de freinage et d'accélération du pneumatique. Cette dépendance de la rigidité en fonction de la température peut donc entraîner des fluctuations non maîtrisées des performances du pneumatique. Il est d'intérêt de disposer de polymères diéniques riches en unités éthylène dont la cristallinité est réduite, voire supprimée.

Dans le document WO 2007054224, la Demanderesse a décrit des copolymères diéniques riches en éthylène qui présentent une cristallinité réduite. Ces copolymères sont des copolymères de 1,3-butadiène et d'éthylène qui contiennent en outre des motifs cycliques hydrocarbonés saturés à 6 membres. Néanmoins, ces copolymères introduits dans une composition de caoutchouc peuvent conférer une rigidité trop élevée à la composition de caoutchouc. La rigidité élevée de la composition de caoutchouc est imputée à une rigidité également élevée de l'élastomère. Une rigidité élevée d'une composition de caoutchouc peut être problématique, car elle peut, elle aussi, rendre la composition de caoutchouc inappropriée pour certaines applications. Le document de brevet CN1079003349 concerne la préparation de caoutchouc éthylène-propylène fonctionnalisé qui comprend la réalisation d'une réaction de copolymérisation d'une alpha-oléfine fonctionnelle et de diène avec de l'éthylène et du propylène sous l'action d'un catalyseur à base de terre rare.

Poursuivant son but de synthétiser des élastomères diéniques riches en éthylène, la Demanderesse a découvert un nouveau polymère qui permet de résoudre les problèmes mentionnés, notamment en présentant un compromis amélioré ente le taux d'éthylène, la rigidité et le taux de cristallinité pour une utilisation en pneumatique.

Ainsi un premier objet de l'invention est un copolymère, de préférence élastomère, d'éthylène et d'un 1,3-diène de formule (I) qui comprend des unités éthylène et des unités du 1,3-diène, les unités éthylène représentant entre 50% et 95% en moles des unités éthylène et des unités du 1,3-diène, et les unités du 1,3-diène de configuration 1,4 représentant plus de 50% en mole des unités du 1,3-diène,

formule (I) : CH₂=CR-CH=CH₂

le symbole R représentant une chaîne hydrocarbonée ayant 3 à 20 atomes de carbone.

Un autre objet de l'invention est un procédé de préparation du copolymère conforme à l'invention.

L'invention concerne aussi une composition de caoutchouc qui comprend au moins un copolymère conforme à l'invention, une charge renforçante et un système de réticulation, lequel copolymère est un élastomère.

L'invention concerne également un pneumatique qui comprend une composition de caoutchouc conforme à l'invention.

### Description détaillée

Dans la présente description, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Sauf indication contraire, les taux des unités résultant de l'insertion d'un monomère dans un copolymère sont exprimés en pourcentage molaire par rapport à la totalité des unités monomères du copolymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les monomères.

Le 1,3-diène de formule (I) comme définie plus haut et utile aux besoins de l'invention étant un 1,3 diène substitué, le 1,3-diène lorsqu'il est polymérisé peut donner lieu à des unités de configuration 1,2 représentée par la formule (1), de configuration 3,4 représentée par la formule (2) et de configuration 1,4 dont la forme trans est représentée ci-après par la formule (3). Une unité du 1,3-diène de configuration 1,4, qu'elle soit cis ou trans, peut être représentée par la formule brute -(CH₂-CR=CH-CH₂)-.

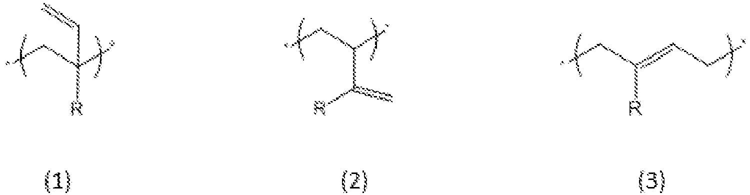

Comme cela est également bien connu, l'unité éthylène est une unité de motif -(CH₂-CH₂)-.

Le copolymère conforme à l'invention est un copolymère d'éthylène et d'un 1,3-diène de formule (I), ce qui implique que les unités monomères du copolymère sont des unités résultant de la polymérisation de l'éthylène et du 1,3-diène. Le copolymère comprend donc des unités éthylène et des unités du 1,3-diène. Le 1,3-diène utile aux besoins de l'invention est un seul composé, c'est-à-dire un seul (en anglais « one ») 1,3-diène de formule (I) ou est un mélange de 1,3-diènes de formule (I), les 1,3-diènes du mélange se différenciant les uns des autres par le groupe représenté par le symbole R.

Le copolymère conforme à l'invention a pour caractéristique essentielle de comprendre entre 50% et 95% en moles d'unité éthylène. Autrement dit, les unités éthylène représentent entre 50% et 95% en moles des unités éthylène et des unités du 1,3-diène. De préférence, dans le copolymère conforme à l'invention, les unités éthylène représentent au moins 60% en mole des unités éthylène et des unités du 1,3-diène. De manière plus préférentielle, les unités éthylène représentent au moins 70% en mole des unités éthylène et des unités du 1,3-diène. De préférence, dans le copolymère conforme à l'invention, les unités éthylène représentent au plus 90% en mole des unités éthylène et des unités du 1,3-diène.

Selon un mode de réalisation particulier de l'invention, les unités éthylène représentent au plus 85% en mole des unités éthylène et des unités du 1,3-diène.

Selon un mode de réalisation préférentiel de l'invention, dans le copolymère conforme à l'invention, les unités éthylène représentent de 60 à 90% en mole des unités éthylène et des unités du 1,3-diène, avantageusement de 70 à 90% en mole des unités éthylène et des unités du 1,3-diène.

Selon un autre mode de réalisation particulier de l'invention, dans le copolymère conforme à l'invention, les unités éthylène représentent de 60 à 85% en mole des unités éthylène et des unités du 1,3-diène, avantageusement de 70 à 85% en mole des unités éthylène et des unités du 1,3-diène.

Le copolymère conforme à l'invention a également pour autre caractéristique essentielle de comprendre des unités d'un 1,3-diène de formule (I) qui sont à plus de 50% de configuration 1,4. En d'autre terme, les unités du 1,3-diène de configuration 1,4 représentent plus de 50% en mole des unités du 1,3-diène. Le complément à 100% en mole des unités du 1,3-diène dans le copolymère est constitué tout ou partie d'unités du 1,3-diène de configuration 1,2 ou 3,4. De préférence, les unités du 1,3-diène de configuration 1,4 représentent plus de 70% en mole des unités du 1,3-diène. Avantageusement, les unités du 1,3-diène de configuration 1,4 sont pour plus de la moitié d'entre elles de configuration 1,4-trans, ce qui signifie que les unités du 1,3-diène de configuration 1,4-trans représentent plus de 50% en mole des unités du 1,3-diène de configuration 1,4.

Dans la formule (I) du 1,3-diène utile aux besoins de l'invention, la chaîne hydrocarbonée représentée par le symbole R peut être une chaîne linéaire ou ramifiée, auquel cas le symbole R représente une chaîne linéaire ou ramifiée. De préférence, la chaîne hydrocarbonée est acyclique, auquel cas le symbole R représente une chaîne acyclique. Dans la formule (I), la chaîne hydrocarbonée représentée par le symbole R peut être saturée ou insaturée, auquel cas le symbole R représente une chaîne saturée ou insaturée. De préférence, le symbole R représente une chaîne hydrocarbonée ayant 6 à 16 atomes de carbone. De manière plus préférentielle, le symbole R représente une chaîne acyclique insaturée. Mieux, le symbole R représente une chaîne acyclique insaturée et ramifiée. Avantageusement, le 1,3-diène est le myrcène ou le β-farnésène.

Selon un mode de réalisation préférentiel de l'invention, le 1,3-diène est le myrcène.

Selon un autre mode de réalisation préférentiel de l'invention, le 1,3-diène est le β-farnésène.

Selon l'un quelconque des modes de réalisation de l'invention, le copolymère conforme à l'invention est préférentiellement un élastomère.

Le copolymère conforme à l'invention peut être préparé par un procédé qui comprend la copolymérisation d'éthylène et du 1,3-diène en présence d'un système catalytique à base au moins d'un métallocène de formule (II) et d'un organomagnésien de formule (III)

formule (II) : P(Cp)(Flu)Nd(BH₄)_{(1+y)-}L_{y}-Nₓ

formule (III) : MgR¹R²

Cp désignant un groupe cyclopentadiényle de formule C₅H₄, Flu désignant un groupe fluorényle de formule C₁₃H₈,

P étant un groupe pontant les deux groupes Cp et Flu et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne, R¹ et R², identiques ou différents, représentant un groupe carboné.

Le système catalytique peut être préparé de façon traditionnelle par un procédé analogue à celui décrit dans la demande de brevet WO 2007054223. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224. Le métallocène peut être préparé de façon traditionnelle par un procédé analogue à celui décrit dans la demande de brevet WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

De préférence, le métallocène est de formule (IIa), (IIb), (IIc), (IId) ou (IIe) dans lesquelles le symbole Flu représente le groupe fluorényle de formule C₁₃H₈ et le symbole Cp représente le groupe cyclopentadienyl de formule C₅H₄.

formule (Ila) : [{Me₂SiCpFluNd(µ-BH₄)₂Li(THF)}₂]

formule (Ilb) : [Me₂SiCpFluNd(µ-BH₄)₂Li(THF)]

formule (Ilc) : [Me₂SiCpFluNd(µ-BH₄)(THF)]

formule (Ild) : [{Me₂SiCpFluNd(µ-BH₄)(THF)}₂]

formule (Ile) : [Me₂SiCpFluNd(µ-BH₄)]

L'organomagnésien utile aux besoins de l'invention est de formule MgR¹R² dans laquelle R¹ et R², identiques ou différents, représentent un groupe carboné. On entend par groupe carboné un groupe qui contient un ou plusieurs atomes de carbone. De préférence, R¹ et R² contiennent 2 à 10 atomes de carbone.

Selon un mode de réalisation préférentiel de l'invention, R¹ et R² représentent chacun un alkyle, préférentiellement un alkyle contenant 2 à 10 atomes de carbone. L'organomagnésien est avantageusement un dialkylmagnésien, mieux le butyléthylmagnésium ou le butyloctylmagnésium, encore mieux le butyloctylmagnésium.

Selon l'un quelconque des modes de réalisation de l'invention, le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C. De préférence, la copolymérisation est conduite à pression constante d'éthylène.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

Selon l'un quelconque des modes de réalisation de l'invention, l'incorporation du 1,3-diène et de l'éthylène dans la chaîne polymère en croissance est préférentiellement statistique. Le copolymère conforme à l'invention est avantageusement un copolymère statistique.

Le copolymère conforme à l'invention, en particulier lorsqu'il est élastomère, peut être utilisé dans une composition de caoutchouc.

La composition de caoutchouc, autre objet de l'invention, a pour caractéristique de comprendre au moins un élastomère conforme à l'invention, une charge renforçante et un système de réticulation.

Le système de réticulation peut être à base de soufre, de donneurs de soufre, de peroxydes, de bismaléimides ou de leurs mélanges. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

La charge renforçante utile aux besoins de l'invention peut comprendre tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. Le taux de charge renforçante est ajustée par l'homme du métier en fonction de l'usage de la composition de caoutchouc.

La composition de caoutchouc peut contenir en outre d'autres additifs connus pour être utilisés dans des compositions de caoutchouc pour pneumatiques, tels que des plastifiants, des anti-ozonants, des antioxydants.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention, pouvant être soit à l'état cru (avant réticulation ou vulcanisation), soit à l'état cuit (après réticulation ou vulcanisation), peut être utilisée dans un article semi-fini pour pneumatique.

Le pneumatique, autre objet de l'invention, comprend la composition de caoutchouc conforme à l'invention définie sous l'un quelconque des modes de réalisation de l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemple

### 1) Synthèse des polymères :

Dans la synthèse de copolymères conformes à l'invention, le 1,3-diène utilisé est le myrcène ou le β-farnésène, 1,3-diènes de formule (I) dans lequel R est un groupe hydrocarboné ayant respectivement 6 atomes et 11 atomes de carbone de formule.

Dans le myrcène, R répond à la formule CH₂-CH₂-CH=CMe₂.

Dans le β-farnésène, R répond à la formule CH₂-CH₂-CH=CMe-CH₂-CH₂-CH=CMe₂.

Tous les réactifs sont obtenus commercialement excepté les métallocènes [{Me₂SiFlu₂Nd(µ-BH₄)₂Li(THF)}] et [Me₂SiCpFluNd(µ-BH₄)₂Li(THF)] qui sont préparés selon les modes opératoires décrit dans les demandes de brevet WO 2007054224 et WO 2007054223.

Le butyloctylmagnésium BOMAG (20% dans l'heptane, C = 0,88 mol L⁻¹) provient de Chemtura et est stocké dans un tube de Schlenk sous atmosphère inerte. L'éthylène, de qualité N35, provient de la société Air Liquide et est utilisé sans purification préalable. Le myrcène (pureté ≥95%) est obtenu chez Sigma-Aldrich. Le β-farnésène (pureté : 90-95%) est obtenu via 1717 CheMall.

1.1- Copolymère d'éthylène et de 1,3-butadiène : exemple 1 non conforme à l'invention. Le polymère est synthétisé selon le mode opératoire suivant :
Dans un réacteur en verre de 500 ml contenant 300 ml de toluène, on ajoute le cocatalyseur, le butyloctylmagnésium (BOMAG) puis le métallocène [Me₂SiCpFluNd(µ-BH₄)₂Li(THF)]. La durée d'alkylation est de 10 minutes, la température de réaction est de 20°C. Les quantités respectives des constituants du système catalytique figurent dans le tableau 1. Ensuite, les monomères sont ajoutés selon les proportions respectives indiquées dans le tableau 1, l'éthylène (Eth) et le 1,3-butadiène (Bde) étant sous la forme d'un mélange gazeux. La polymérisation est conduite à 80°C et à une pression d'éthylène constante de 4 bars. La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide jusqu'à masse constante. Le tableau 2 présente la microstructure du polymère et ses propriétés.

1.2 - Copolymère d'éthylène et de 1,3-butadiène : exemple 2 non conforme à l'invention Le polymère est synthétisé selon le mode opératoire suivant :
Dans un réacteur en verre de 500 ml contenant 300 ml de méthylcyclohexane, on ajoute le co-catalyseur, le butyloctylmagnésium (BOMAG) puis le métallocène [Me₂Si(Flu)₂Nd(µ-BH₄)₂Li(THF)]. La durée d'alkylation est de 10 minutes, la température de réaction est de 20°C. Les quantités respectives des constituants du système catalytique figurent dans le tableau 1. Ensuite, les monomères sont ajoutés selon les proportions respectives indiquées dans le tableau 1, l'éthylène (Eth) et le 1,3-butadiène (Bde) étant sous la forme d'un mélange gazeux. La polymérisation est conduite à 80°C et à une pression d'éthylène constante de 4 bars. La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide jusqu'à masse constante. Le tableau 2 présente la microstructure du polymère et ses propriétés.

1.3- Copolymère d'éthylène et de myrcène : exemples 3 à 5 conformes à l'invention Les polymères sont synthétisés selon le mode opératoire suivant :
Dans un réacteur contenant à 80°C du méthylcyclohexane, de l'éthylène et du myrcène dans les proportions indiquées dans le tableau 3, on ajoute du butyloctylmagnésium (BOMAG) pour neutraliser les impuretés du réacteur, puis le système catalytique (cf tableau 3). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en myrcène dans les proportions définies dans le tableau 3. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. Le système catalytique est un système catalytique préformé. Il est préparé dans le méthylcyclohexane à partir d'un métallocène, le [Me₂SiCpFluNd(µ-BH₄)₂Li(THF)], d'un co-catalyseur, le butyloctylmagnésium (BOMAG), et d'un monomère de préformation, le 1,3-butadiène, dans les teneurs indiquées dans le tableau 3. Il est préparé selon une méthode de préparation conforme au paragraphe Il de la demande de brevet WO 2018100279 A1.

La microstructure des polymères et leurs propriétés figurent dans le tableau 4.

1.4- Copolymère d'éthylène et de β-farnésène : exemples 6 à 7 conformes à l'invention Les polymères sont synthétisés selon le mode opératoire suivant :
Dans un réacteur en verre de 500 ml contenant 300 ml de méthylcyclohexane, on ajoute le co-catalyseur, le butyloctylmagnésium (BOMAG) puis le métallocène [Me₂SiCpFluNd(µ-BH₄)₂Li(THF)]. La durée d'alkylation est de 10 minutes, la température de réaction est de 20°C. Les quantités respectives des constituants du système catalytique figurent dans le tableau 5. Ensuite, 70% de la charge de β-farnésène est ajoutée dans le réacteur avant l'injection de l'éthylène gazeux, les 30% restants étant introduits dans le réacteur à 65% de conversion. La polymérisation est conduite à 80°C et à une pression d'éthylène constante de 4 bars. La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide jusqu'à masse constante. La microstructure des polymères et leurs propriétés figurent dans le tableau 6.

### 2) Détermination de la microstructure des polymères :

La caractérisation spectrale et les mesures de la microstructure des copolymères d'éthylèneet du 1,3-myrcène et des copolymères d'éthylène et du β-farnésène sont réalisées par spectroscopie de Résonance Magnétique Nucléaire (RMN).

Spectromètre : Pour ces mesures, un spectromètre Bruker Avance III HD 400 MHz est utilisé, équipé d'une sonde Bruker cryo-BBFO z-grad 5 mm.

Expériences : Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Cohérence) et HMBC (Heteronuclear Multiple-Bond Correlation) sont enregistrées avec un nombre de répétition de 128 et un nombre d'incréments de 128. Les expériences sont réalisées à 25 °C.

Préparation de l'échantillon : 25 mg d'échantillon sont solubilisés dans 1 mL de chloroforme deutéré (CDCl3).

Calibration de l'échantillon : Les axes des déplacements chimiques ¹H et ¹³C sont calibrés par rapport à l'impureté protonée du solvant (CHCl₃) à δ_{1H} = 7,2 ppm et δ_{13C} = 77 ppm.

Attribution spectrale pour les copolymères d'éthylène-et du 1,3-myrcène (voir Chem 1) : Dans la représentation Chem 1, les symboles R₁ et R₂ représentent les points de rattachement de l'unité à la chaîne polymère. Dans la représentation Chem 1, les signaux des formes d'insertion du 1,3-diène A, B et C ont été observés sur les différents spectres enregistrés. D'après S. Georges *et al.*, (S. Georges, M. Bria, P. Zinck and M. Visseaux, Polymer 55 (2014) 3869-3878), le signal du groupement -CH= n°8" caractéristique de la forme C présente des déplacements chimiques ¹H et ¹³C identiques au groupement -CH= n°3.

Les déplacements chimiques des signaux caractéristiques des motifs A, B et C sont présentés dans le tableau 7. Les motifs A, B et C correspondent respectivement aux unités de configuration 3,4, de configuration 1,2 et de configuration 1,4-trans.

Les quantifications ont été effectuées à partir de l'intégration des spectres RMN 1D ¹H à l'aide du logiciel Topspin.

Les signaux intégrés pour la quantification des différents motifs sont :
Ethylène : signal à 1.2 ppm correspondant à 4 protons.
Myrcène total : signal n°1 (1.59 ppm) correspondant à 6 protons.
Forme A : signal n°7 (4.67 ppm) correspondant à 2 protons.
Forme B : signal n°8' (5.54 ppm) correspondant à 1 protons.

La quantification de la microstructure est réalisée en pourcentage molaire (% molaire) comme suit : % molaire d'un motif = intégrale 1H d'un motif ^{∗} 100 / Σ (intégrales 1H de chaque motif)

Attribution spectrale pour les copolymères d'éthylène-et du β-farnésène (voir Chem 2) : Dans la représentation Chem 2, les symboles R₁ et R₂ représentent les points de rattachement de l'unité à la chaîne polymère. Dans la représentation Chem 2, les signaux des formes d'insertion du farnesène A et B ont été observés sur les différents spectres enregistrés. Le signal du groupement-CH= n°11" caractéristique de la forme C présente des déplacements chimiques 1H et 13C identiques aux groupements -CH= n°3 et n°7. Les déplacements chimiques des signaux caractéristiques des motifs A, B et C sont présentés dans le tableau 8. Les motifs A, B et C (Chem 2) correspondent respectivement aux unités de configuration 3,4, de configuration 1,2 et de configuration 1,4-trans.

Les quantifications ont été effectuées à partir de l'intégration des spectres RMN 1D 1H à l'aide du logiciel Topspin.

Les signaux intégrés pour la quantification des différents motifs sont :
Ethylène : à partir du signal des -CH₂-CH₂- (à 1.19 ppm) pour 4 protons,
Farnesène total : à partir du signal attribué aux groupements n°1, 13 pour 9 protons, ce signal étant commun à toutes les formes d'insertion du farnesène,
Forme A : à partir du signal n°14, propre à cette forme, pour 2 protons,
Forme B : à partir du signal n°11', propre à cette forme, pour 1 proton.

La proportion de forme C n'est pas accessible directement mais peut être calculée à partir du signal attribué aux groupements n°3, 7, 11".

La quantification de la microstructure est réalisée en pourcentage molaire (% molaire) comme suit : % molaire d'un motif = intégrale 1H d'un motif ^{∗} 100 / Σ (intégrales 1H de chaque motif).

### 3) Détermination de la rigidité des polymères (à cru) :

Les mesures sont réalisées sur un rhéomètre Anton Paar modèle MCR301 en mode Cisaillement avec des éprouvettes cylindriques de géométrie maîtrisée (épaisseur comprise entre 1,5mm et 3mm et diamètre compris entre 22mm et 28mm). L'échantillon est soumis à une sollicitation sinusoïdale en cisaillement, à une température fixe (correspondant à la fin du passage de la transition vitreuse de l'élastomère sur un balayage en température à 10Hz), et sur une plage fréquentielle allant de 0.01Hz à 100Hz. La valeur de rigidité retenue comme étant la rigidité du plateau caoutchoutique de l'échantillon est la valeur du module de cisaillement G' pour la fréquence à laquelle le module de perte G" atteint son minimum, conformément à la méthode décrite par C. Liu, J. He, E. van Ruymbeke, R. Keunings, C. Bailly, Evaluation of different methods for the détermination of the plateau modulus and the entanglement molecular weight, Polymer 47 (2006) 4461-4479.

### 4) Détermination du taux de cristallinité des polymères :

La norme ISO 11357-3 :2011 est utilisée pour déterminer la température et l'enthalpie de fusion et de cristallisation des polymères utilisés par analyse calorimétrique différentielle (DSC). L'enthalpie de référence du polyéthylène est de 277,1 J/g (d'après Handbook of Polymer 4th Edition, J. BRANDRUP, E. H. IMMERGUT, and E. A. GRULKE, 1999).

### 5) Résultats :

Dans l'exemple 1 (témoin), le copolymère diénique riche en éthylène et synthétisé par polymérisation de l'éthylène et du 1,3-butadiène en présence du métallocène [Me₂SiCpFluNd(µ-BH₄)₂Li(THF)] présente une forte cristallinité (31%) qui peut le rendre inapproprié pour certaines utilisations.

Dans l'exemple 2 (non conforme), le copolymère diénique riche en éthylène synthétisé en présence du métallocène [Me₂Si(Flu)₂Nd(µ-BH₄)₂Li(THF)] présente des motifs cycliques. Bien qu'il contienne un taux d'éthylène comparable à celui du témoin, il n'est pas cristallin. Néanmoins, il a une rigidité relativement élevée qui peut le rendre inapproprié pour certaines utilisations.

L'utilisation de myrcène à la place du 1,3-butadiène permet l'obtention de copolymères de cristallinité bien plus faible, même à des taux d'éthylène très élevé. En effet, dans l'exemple 3, le copolymère bien qu'ayant un taux d'éthylène (77%) plus élevé que dans les exemples 1 et 2 (respectivement 73% et 71%), présente à la fois un taux de cristallinité proche de 0% et une rigidité à cru bien inférieure à celle des exemples 1 et 2.

L'utilisation de β-farnésène à la place de myrcène permet l'obtention de copolymère de même rigidité que les copolymères d'éthylène et de myrcène, mais ce résultat est obtenu pour des taux plus élevés en éthylène dans le cas du β-farnésène. En effet les taux d'unité éthylène des exemples 6 et 7 sont supérieurs à ceux des exemples 4 et 5 alors que les taux de cristallinité et la rigidité à cru sont quasiment les mêmes.

En résumé, le remplacement du 1,3-butadiène par un 1,3-diène de formule CH₂=CR-CH=CH₂, R représentant une chaîne hydrocarbonée ayant 3 à 20 atomes de carbone, comme le myrcène ou le β-farnésène, permet de synthétiser des polymères diéniques riches en éthylène avec un compromis amélioré entre le taux d'éthylène, le taux de cristallinité et la rigidité et d'élargir le champ d'application des copolymères diéniques riches en éthylène dans des compositions de caoutchouc.

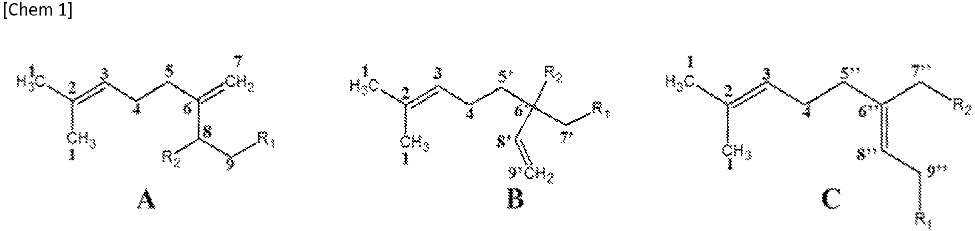

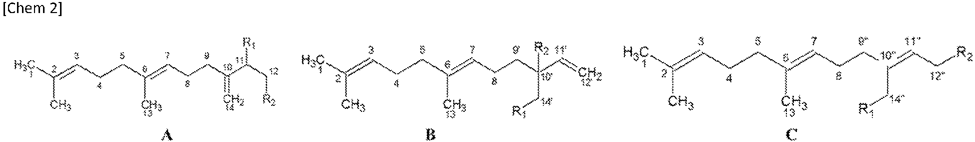

**Tableau 1**

| Exemple | Concentration métallocène (mmol/L) | Concentration agent alkylant (mmol/L) | Composition mélange gazeux (%mol Eth/Bde) |
|---|---|---|---|
| Exemple 1 | 0.32 | 0.97 | 80/20 |
| Exemple 2 | 0.16 | 0.78 | 70/30 |

**Tableau 2**

| Exemple | Ethylène (%mol) | Butadiène 1,2 (%mol) | Butadiène 1,4 trans (%mol) | 1,2-cyclohexanediyle (%mol) | Cristallinité (%) | Rigidité à cru (MPa) |
|---|---|---|---|---|---|---|
| Exemple 1 | 73.7 | 1 | 25.3 | - | 31.1 | - |
| Exemple 2 | 71 | 8 | 8 | 13 | 0 | 1 |

**Tableau 3**

| Exemple | Concentration métallocène (mmol/L) | Concentration agent alkylant (mmol/L) | Ratio molaire monomère préformation/métal Nd | Composition de l'alimentation (%mol Eth/Myrcène) | Température de polymérisation (°C) |
|---|---|---|---|---|---|
| Exemple 3 | 0.18 | 0.40 | 90 | 80/20 | 60 |
| Exemple 4 | 0.21 | 0.48 | 90 | 70/30 | 50 |
| Exemple 5 | 0.20 | 0.45 | 90 | 60/40 | 50 |

**Tableau 4**

| Exemples | Ethylène (% mol) | Myrcène (% mol) | Myrcène 1,4 trans- (% mol/% mol myrcène) | Cristallinité (%) | Rigidité à cru (MPa) |
|---|---|---|---|---|---|
| Exemple 3 | 77 | 23 | 78 | 3 | 0.8 |
| Exemple 4 | 60 | 40 | 78 | 0 | 0.3 |
| Exemple 5 | 56 | 44 | 77 | 0 | 0.3 |

**Tableau 5**

| Exemple | Concentration métallocène (mmol/L) | Concentration agent alkylant (mmol/L) | Composition alimentation (%mol Eth/BFar) | Température de polymérisation (°C) |
|---|---|---|---|---|
| Exemple 6 | 0.18 | 0.44 | 70/30 | 60 |
| Exemple 7 | 0.17 | 0.42 | 60/40 | 50 |

**Tableau 6**

| Exemples | Ethylène (% mol) | β-farnésène (% mol) | β-farnésène 1,4 trans-(% mol/% mol β-farnésène) | Cristallinité (%) | Rigidité à cru (MPa) |
|---|---|---|---|---|---|
| Exemple 6 | 67 | 33 | 79 | 1.1 | 0.3 |
| Exemple 7 | 62 | 38 | 87 | 0 | - |

**Tableau 7 : Attribution des signaux ¹H et ¹³C de copolymères Ethylène-Myrcène**

| **δ_{1H} (ppm)** | **δ_{13C} (ppm)** | **Groupement** |
|---|---|---|
| **5.54** | 146.4 | 8' |
| **5.07** | 124.6 | 3 + 8" |
| **4.97** - 4.79 | 112.0 | 9' |
| **4.67** | 108.5 | 7 |
| **2.06** | 26.5 | 4 |
| **2.0 - 1.79** | 31.8 | 5 + 5' + 5" |
| | 44.5 | 8 |
| **1.59** | 25.9 et 17.0 | 1 |
| **1.2** | 36.8 - 24.0 | CH₂ éthylène |

**Tableau 8 : Attribution des signaux ¹H et ¹³C de copolymères Ethylène-β-farnésène**

| δ1H (ppm) | δ13C (ppm) | Groupement |
|---|---|---|
| 5.54 | 146.4 | 11' |
| 5.07 | 124.6 | 3, 7, 11" |
| 4.97-4.79 | 112.0 | 12' |
| 4.67 | 108.5 | 14 |
| 2.16 - 1.77 | 24 - 42.9 | 4, 5, 8, 9, 9', 9", 12",14" |
| 1.89 | 46.9 | 11 |
| 1.59 | 25.9 et 17.0 | 1, 13 |
| 1.2 | 36.8 - 24.0 | CH₂ éthylène |

## Revendications

1. Procédé de préparation d'un copolymère d'éthylène et d'un 1,3-diène de formule (I) qui comprend des unités éthylène et des unités du 1,3-diène, les unités éthylène représentant entre 50% et 95% en moles des unités éthylène et des unités du 1,3-diène, et les unités du 1,3-diène de configuration 1,4 représentant plus de 50% en mole des unités du 1,3-diène
formule (I) : CH₂=CR-CH=CH₂
le symbole R représentant une chaîne hydrocarbonée ayant 3 à 20 atomes de carbone, lequel procédé comprend la polymérisation d'éthylène et du 1,3-diène en présence d'un système catalytique à base au moins d'un métallocène de formule (II) et d'un organomagnésien de formule (III)
formule (II) : P(Cp)(Flu)Nd(BH₄)_{(1+y)-}L_{y}-Nₓ
formule (III) : MgR¹R²
Cp désignant un groupe cyclopentadiényle de formule C₅H₄, Flu désignant un groupe fluorényle de formule C₁₃H₈,
P étant un groupe pontant les deux groupes Cp et Flu et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne,
R¹ et R², identiques ou différents, représentant un groupe carboné.

2. Procédé selon la revendication 1 dans lequel les unités éthylène représentent au moins 60%, de préférence au moins 70% en mole des unités éthylène et des unités du 1,3-diène.

3. Procédé selon la revendication 1 ou 2 dans lequel les unités éthylène représentent au plus 90%.

4. Procédé selon l'une quelconque des revendications 1 à 3 dans lequel les unités éthylène représentent au plus 85% en mole des unités éthylène et des unités du 1,3-diène.

5. Procédé selon l'une quelconque des revendications 1 à 4 dans lequel les unités du 1,3-diène de configuration 1,4 représentent plus de 70% en mole des unités du 1,3-diène.

6. Procédé selon l'une quelconque des revendications 1 à 5 dans lequel les unités du 1,3-diène de configuration 1,4 sont pour plus de la moitié d'entre elles de configuration 1,4-trans.

7. Procédé selon l'une quelconque des revendications 1 à 6 dans lequel le symbole R représente une chaîne acyclique, de préférence une chaîne acyclique insaturée.

8. Procédé selon l'une quelconque des revendications 1 à 7 dans lequel le 1,3-diène est le myrcène ou le β-farnésène.

9. Procédé selon l'une quelconque des revendications 1 à 8, dans lequel le copolymère est un copolymère statistique.

10. Procédé selon l'une quelconque des revendications 1 à 9 dans lequel le métallocène est de formule (IIa), (IIb), (IIc), (IId) ou (IIe)
formule (IIa) : [{Me₂SiCpFluNd(µ-BH₄)₂Li(THF)}₂]
formule (Ilb) : [Me₂SCpiFluNd(µ-BH₄)₂Li(THF)]
formule (Ilc) : [Me₂SiCpFluNd(µ-BH₄)(THF)]
formule (IId) : [{Me₂SiCpFluNd(µ-BH₄)(THF)}₂]
formule (IIe) : [Me₂SiCpFluNd(µ-BH₄)]
Cp désignant un groupe cyclopentadiényle de formule C₅H₄, Flu désignant un groupe fluorényle de formule C₁₃H₈.

11. Procédé selon l'une quelconque des revendications 1 à 10 dans lequel R¹ et R² représentent chacun un alkyle, de préférence un alkyle contenant 2 à 10 atomes de carbone.

12. Procédé selon l'une quelconque des revendications 1 à 11 dans lequel l'organomagnésien est le butyléthylmagnésium ou le butyloctylmagnésium, de préférence le butyloctylmagnésium.

13. Composition de caoutchouc qui comprend au moins un copolymère défini à l'une quelconque des revendications 1 à 9, une charge renforçante et un système de réticulation, lequel copolymère est un élastomère.

14. Pneumatique qui comprend une composition de caoutchouc définie selon la revendication 13.

15. Copolymère défini à l'une quelconque des revendications 1 à 6 dans lequel le 1,3-diène est le β-farnésène, lequel copolymère est préférentiellement un copolymère statistique.

## Patentansprüche

1. Verfahren zur Herstellung eines Copolymer von Ethylen und einem 1,3-Dien der Formel (I), das Ethylen-Einheiten und 1,3-Dien-Einheiten umfasst, wobei die Ethylen-Einheiten zwischen 50 und 95 Mol-% der Ethylen-Einheiten und 1,3-Dien-Einheiten ausmachen und die 1,3-Dien-Einheiten mit 1,4-Konfiguration mehr als 50 Mol-% der 1,3-Dien-Einheiten ausmachen,
Formel (I): CH₂=CR-CH=CH₂
wobei das Symbol R für eine Kohlenwasserstoffkette mit 3 bis 20 Kohlenstoffatomen steht,
welches Verfahren die Polymerisation von Ethylen und dem 1,3-Dien in Gegenwart eines katalytischen Systems auf Basis von mindestens einem Metallocen der Formel (II) und einer Organomagnesiumverbindung der Formel (III) umfasst,
Formel (II) : P (Cp) (Flu)Nd(BH₄)_{(1+y)}L_{y}-Nₓ
Formel (III) : MgR¹R²
wobei Cp für eine Cyclopentadienylgruppe der Formel C₅H₄ steht und Flu für eine Fluorenylgruppe der Formel C₁₃H₈ steht,
wobei P eine die beiden Gruppen Cp und Flu verbrückende Gruppe ist und für eine Gruppe ZR³R⁴ steht, wobei Z für ein Silicium- oder Kohlenstoffatom steht und R³ und R⁴ gleich oder verschieden sind und jeweils für eine Alkylgruppe mit 1 bis 20 Kohlenstoffatomen, vorzugsweise ein Methyl, stehen,
wobei y ganzzahlig ist und gleich oder größer als 0 ist,
wobei x ganzzahlig oder nicht ganzzahlig ist und gleich oder größer als 0 ist,
wobei L für ein Alkalimetall, das aus der Gruppe bestehend aus Lithium, Natrium und Kalium ausgewählt ist, steht,
wobei N für ein Molekül eines Ethers, vorzugsweise von Diethylether oder Tetrahydrofuran, steht und wobei R¹ und R² gleich oder verschieden sind und für eine Kohlenstoffgruppe stehen.

2. Verfahren nach Anspruch 1, wobei die Ethylen-Einheiten mindestens 60 Mol-%, vorzugsweise mindestens 70 Mol-%, der Ethylen-Einheiten und 1,3-Dien-Einheiten ausmachen.

3. Verfahren nach Anspruch 1 oder 2, wobei die Ethylen-Einheiten höchstens 90 % ausmachen.

4. Verfahren nach einem der Ansprüche 1 bis 3, wobei die Ethylen-Einheiten höchstens 85 Mol-% der Ethylen-Einheiten und 1,3-Dien-Einheiten ausmachen.

5. Verfahren nach einem der Ansprüche 1 bis 4, wobei die 1,3-Dien-Einheiten mit 1,4-Konfiguration mehr als 70 Mol-% der 1,3-Dien-Einheiten ausmachen.

6. Verfahren nach einem der Ansprüche 1 bis 5, wobei mehr als die Hälfte der 1,3-Dien-Einheiten mit 1,4-Konfiguration in der 1,4-trans-Konfiguration vorliegen.

7. Verfahren nach einem der Ansprüche 1 bis 6, wobei das Symbol R für eine acyclische Kette, bevorzugt eine ungesättigte acyclische Kette, steht.

8. Verfahren nach einem der Ansprüche 1 bis 7, wobei es sich bei dem 1,3-Dien um Myrcen oder β-Farnesen handelt.

9. Verfahren nach einem der Ansprüche 1 bis 8, wobei es sich bei dem Copolymer um ein statistisches Copolymer handelt.

10. Verfahren nach einem der Anspruch 1 bis 9, wobei das Metallocen die Formel (IIa), (IIb), (IIc), (IId) oder (IIe) aufweist:
Formel (IIa) [{Me₂SiCpFluNd(µ-BH₄)₂Li(THF)}₂]
Formel (IIb) [Me₂SiCpFluNd(µ-BH₄)₂Li(THF)]
Formel (IIc) [Me₂SiCpFluNd(µ-BH₄)(THF)]
Formel (IId) [{Me₂SiCpFluNd(µ-BH₄)(THF)}₂]
Formel (IIe) [Me₂SiCpFluNd(µ-BH₄)]
wobei Cp für eine Cyclopentadienylgruppe der Formel C₅H₄ steht und Flu für eine Fluorenylgruppe der Formel C₁₃H₈ steht.

11. Verfahren nach einem der Ansprüche 1 bis 10, wobei R¹ und R² jeweils für ein Alkyl, vorzugsweise ein Alkyl mit 2 bis 10 Kohlenstoffatomen, stehen.

12. Verfahren nach einem der Ansprüche 1 bis 11, wobei es sich bei der Organomagnesiumverbindung um Butylethylmagnesium oder Butyloctylmagnesium, vorzugsweise Butyloctylmagnesium, handelt.

13. Kautschukzusammensetzung, die mindestens ein in einem der Ansprüche 1 bis 9 definiertes Copolymer, einen verstärkenden Füllstoff und ein Vernetzungssystem umfasst, wobei es sich bei dem Copolymer um ein Elastomer handelt.

14. Reifen, der eine Kautschukzusammensetzung gemäß Anspruch 13 umfasst.

15. Copolymer, das in einem der Ansprüche 1 bis 6 definiert wird, wobei es sich bei dem 1,3-Dien um β-Farnesen handelt, welches Copolymer vorzugsweise ein statistisches Copolymer ist.

## Claims

1. Process for preparing a copolymer of ethylene and of a 1,3-diene of formula (I) which comprises ethylene units and units of the 1,3-diene, the ethylene units representing between 50 mol% and 95 mol% of the ethylene units and of the units of the 1,3-diene, and the units of the 1,3-diene of 1,4 configuration representing more than 50 mol% of the units of the 1,3-diene,
formula (I): CH₂=CR-CH=CH₂
the symbol R representing a hydrocarbon chain having from 3 to 20 carbon atoms which process comprises the polymerization of ethylene and of the 1,3-diene in the presence of a catalytic system based at least on a metallocene of formula (II) and on an organomagnesium compound of formula (III)
formula (II): P(Cp)(Flu)Nd(BH₄)_{(1+y)-}L_{y}-Nₓ
formula (III): MgR¹R²
Cp denoting a cyclopentadienyl group of formula C₅H₄, Flu denoting a fluorenyl group of formula C₁₃H₈,
P being a group bridging the two Cp and Flu groups and representing a ZR³R⁴ group, Z representing a silicon or carbon atom, R³ and R⁴, which may be identical or different, each representing an alkyl group comprising from 1 to 20 carbon atoms, preferably a methyl,
y, which is an integer, being equal to or greater than 0,
x, which is or is not an integer, being equal to or greater than 0,
L representing an alkali metal selected from the group consisting of lithium, sodium and potassium,
N representing a molecule of an ether, preferably diethyl ether or tetrahydrofuran,
R¹ and R², which may be identical or different, representing a carbon group.

2. Process according to Claim 1, in which the ethylene units represent at least 60 mol%, preferably at least 70 mol%, of the ethylene units and of the units of the 1,3-diene.

3. Process according to Claim 1 or 2, in which the ethylene units represent at most 90%.

4. Process according to any one of Claims 1 to 3, in which the ethylene units represent at most 85 mol% of the ethylene units and of the units of the 1,3-diene.

5. Process according to any one of Claims 1 to 4, in which the units of the 1,3-diene of the 1,4 configuration represent more than 70 mol% of the units of the 1,3-diene.

6. Process according to any one of Claims 1 to 5, in which more than half of the units of the 1,3-diene of the 1,4-configuration are of the 1,4-trans configuration.

7. Process according to any one of Claims 1 to 6, in which the symbol R represents an acyclic chain, preferably an unsaturated acyclic chain.

8. Process according to any one of Claims 1 to 7, in which the 1,3-diene is myrcene or β-farnesene.

9. Process according to any one of Claims 1 to 8, which copolymer is a statistical copolymer.

10. Process according to any one of Claims 1 to 9, in which the metallocene is of formula (IIa), (IIb), (IIc), (IId) or (IIe)
formula (IIa): [{Me₂SiCpFluNd(µ-BH₄)₂Li(THF)}₂]
formula (IIb): [Me₂SCpiFluNd(µ-BH₄)₂Li(THF)]
formula (IIC): [Me₂SiCpFluNd(µ-BH₄)(THF)]
formula (IId): [{Me₂SiCpFluNd(µ-BH₄)(THF)}₂]
formula (IIe): [Me₂SiCpFluNd(µ-BH₄)]
Cp denoting a cyclopentadienyl group of formula C₅H₄, Flu denoting a fluorenyl group of formula C₁₃H₈.

11. Process according to any one of Claims 1 to 10, in which R¹ and R² each represent an alkyl, preferably an alkyl containing 2 to 10 carbon atoms.

12. Process according to any one of Claims 1 to 11, in which the organomagnesium compound is butylethylmagnesium or butyloctylmagnesium, preferably butyloctylmagnesium.

13. Rubber composition which comprises at least one copolymer defined in any one of Claims 1 to 9, a reinforcing filler and a crosslinking system, which copolymer is an elastomer.

14. Tyre which comprises a rubber composition defined according to Claim 13.

15. Copolymer defined in any one of Claims 1 to 6, in which the 1,3-diene is β-farnesene, which copolymer is preferably a statistical copolymer.
